# EUROPEAN PATENT APPLICATION

(11) **EP 2 113 375 A1**
(43) Date of publication of application: **04.11.2009**
(21) Application number: 09159139.6
(22) Date of filing: 30.04.2009
(51) Int. Cl.: B32B 1/08, F16L 59/14

(54) **Ventilation duct**

(30) Priority: 30.04.2008 FI 20085395
(71) Applicant: Uponor Innovation AB, 513 81 Fristad (SE)
(72) Inventor: Juuti, Rauno, 15550, Nastola (FI); Kojo, Marko, 04310, Tuusula (FI)
(74) Representative: Huhtanen, Ossi Jaakko

(57) **Abstract**

A ventilation duct comprises a body layer and an insulation layer (3). A corrugated outer layer (2) constitutes the body layer. The insulation layer (3) is pre-produced and arranged on the inside of the outer layer (2) in such a manner that the insulation layer (3) constitutes the inner layer of the ventilation duct (1). The free outer diameter of the insulation layer (3) may be larger than the smallest inner diameter of the corrugated outer layer (2). An adhesion layer may be disposed between the outer surface of the insulation layer and the inner surface of the corrugated outer layer (2) for fastening the insulation layer (3) and the outer layer (2) to one another.

## Description

### BACKGROUND OF THE INVENTION

The invention relates to a ventilation duct comprising a body layer and an insulation layer.

The invention further relates to a method for forming a ventilation duct.

In some fields of application, ventilation ducts should be insulated. An insulation layer is arranged in the ventilation duct, typically to the outside of the ventilation duct, for instance when the duct is arranged in a space wherein the temperature of air is lower than the temperature of the air flowing to the inside of the duct, i.e. the duct requires thermal insulation. On the other hand, an insulation layer is some times required as condensation insulation, i.e. for instance in a situation when the temperature of the air flowing inside the ventilation duct is lower than the temperature of the air outside the duct.

Publication FI 20055297 discloses a ventilation duct having a body layer and an insulation layer arranged on the outside thereof. An outer layer, which is able to compact the insulation layer before the duct is installed, is arranged on the outside of the insulation layer. In connection with the installation, the outer layer may be removed or the outer layer may be large enough to remain in place for protecting the insulation layer even though the insulation layer is expanded to its normal size.

Publication US 5 947 158 discloses a duct having a core layer and an insulation arranged on the outside thereof. An outer jacket is further arranged on the outside of the insulation.

Publications WO 2004039574 and JP 2004322583 disclose an insulated duct formed by extruding plastic material containing a foaming agent to the inside of an outer layer. With the foaming agent a foamed insulation layer is obtained. However, the manufacturing method is quite complicated, which easily leads to fairly high total costs.

### BRIEF DESCRIPTION OF THE INVENTION

The object of the present invention is to provide a new type of ventilation duct.

The ventilation duct of the invention is **characterized in that** a corrugated outer layer constitutes the body layer, that the insulation layer is pre-produced, that the pre-produced insulation layer is arranged on the inside of the outer layer, and that the pre-produced insulation layer constitutes the inner layer of the ventilation duct.

The method of the invention is characterized by forming an insulation layer and arranging it into the shape of a duct, guiding the pre-produced insulation layer formed into the shape of a duct into a corrugator and producing with the corrugator a corrugated outer layer to the outside of the insulation layer.

The idea of the invention is that the ventilation duct comprises a corrugated outer layer and a pre-produced insulation layer arranged on the inside thereof, the insulation layer constituting the inner layer of the ventilation duct. Such a ventilation duct is flexible and ductile, making it easy to install in position also in tricky installation sites. In addition, the ventilation duct can be kept, stored and transported wound onto a coil. Furthermore, the ventilation duct is insulated, enabling on-site insulation of ventilation ducts to be cut down or even omitted, even if the ventilation duct required condensation insulation, for example. Due to the corrugation, the ring stiffness of the ventilation duct is quite good, making the ventilation duct solid and steady and, consequently, resistant to external stress. On the whole the structural configuration of the ventilation duct renders it simple and easy to manufacture. As the insulation layer constitutes the inner layer of the ventilation duct, it simultaneously operates also as sound damper, and the ventilation duct thus dampens flow noises and separate sound dampers are not necessarily required in the ventilation duct system.

The idea of an embodiment is that the free outer diameter of the pre-produced insulation layer is larger throughout than the smallest inner diameter of the corrugated outer layer. This being so, the pre-produced insulation is tightly pressed against the outer jacket. The insulation layer is tightly installed in the ventilation duct, making the ventilation duct solid and presentable on the whole.

The idea of another embodiment is that a layer, which solders/glues the pre-produced insulation layer and the outer jacket together, is arranged on the outside of the insulation layer between the insulation layer and the corrugated outer layer. Such a layer may be provided for instance by means of a plastic film in such a manner that the material of the plastic film is heated for gluing/welding the insulation layer and the corrugated outer layer together.

The idea of a third embodiment is that the inner surface of the insulation layer is arranged antistatic for instance by coating the inner surface of the insulation layer with an aluminium film or a thin polyethylene layer containing carbon black. The antistatic inner coating preferably endures a mechanical cleaning of the duct. In this manner, the ventilation duct remains clean during use and is also easy to clean.

### BRIEF DESCRIPTION OF THE FIGURES

The invention will be described in more detail in the accompanying drawing, in which
Figure 1 schematically shows a partially cross-sectional side view of an apparatus for preparing a ventilation duct, and
Figure 2 schematically shows a cross-sectional side view of a ventilation duct.

In the figures, some embodiments of the invention are shown in a simplified manner for the sake of clarity. In the figures, like parts are denoted with like reference numerals.

### DETAILED DESCRIPTION OF SOME EMBODIMENTS OF THE INVENTION

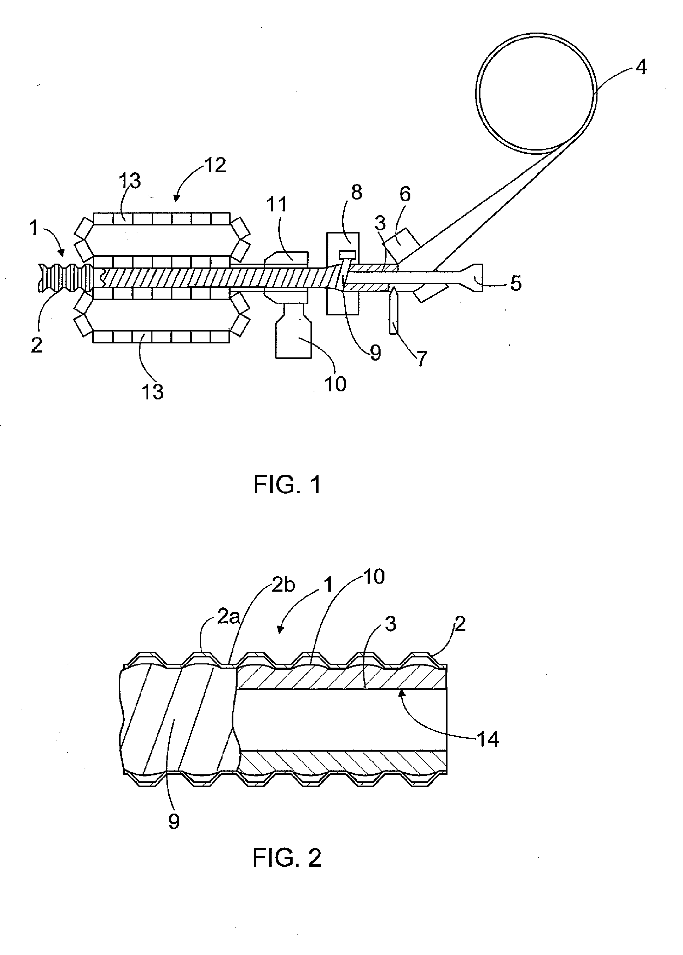

Figure 1 shows an apparatus for preparing a ventilation duct. The ventilation duct 1 comprises a corrugated outer layer 2. An insulation layer 3 is disposed inside the outer layer 2. The insulation layer 3 constitutes the inner layer of the ventilation duct 1.

The insulation layer 3 is constructed from a prefabricated insulation in a plate-like form on a coil 4. For the sake of clarity, Figure 1 does not show the means for supporting and rotating the coil 4. From the coil 4, the insulation 3 in a plate-like form is fed via a winding device 6, the plate-like insulation 3 being wound around a mandrel 5. The sides of the plate-like insulation 3 are connected with a soldering device 7. The seam composed of the sides of the plate-like insulation 3, disposed against one another, is for instance melt with hot air closed in a manner rendering the entire insulation layer 3 continuous. The soldering device 7 may melt the seams together also in another manner, known *per se*, than by utilizing hot air. Instead of the soldering device 7, a gluing device, for example, may also be used for connecting the sides of the plate-like insulation.

The insulation layer 3 is then fed via a winding device 8, wherein plastic film 9 is wrapped around the insulation layer 3 with the winding device 8. Because the insulation layer 3 moves forward in the apparatus all the time, i.e. to the left, seen in Figure 1, and the winding device 8 winds the plastic film roll around the insulation 3, the plastic film 9 settles around the insulation layer 3 in the form of a helical line or a spiral.

Because the plastic film 9 is used to decrease the outer diameter of the insulation layer 3, a mandrel 5 or overpressure, for example, or another structure supporting the insulation layer 3 from the inside has to be disposed inside the insulation layer 3. If no plastic film 9 is wrapped onto the outside of the insulation layer 3 or the outer dimensions of the insulation layer 3 are not decreased in any other manner, the mandrel or another structure disposed inside the insulation layer 3 is not necessarily required.

The insulation layer 3, whose outer diameter is thus preferably decreased with plastic film 9, is conveyed through a nozzle 11 of an extruder 10. In Figure 1, the decreasing of the outer diameter is illustrated in an exaggerated manner. The extruder 10 and the nozzle 11 are used to extrude a plastic layer onto the outside of the insulation layer 3 and the plastic film 9, the plastic layer being processed into a corrugated outer layer 2 for the ventilation duct 1 in a corrugator 12. The corrugator 12 includes two moving chill moulds 13 in a manner known *per se*. The structures and operations of the extruder 10, the nozzle 11 and the corrugator 12 are not described in more detail in the present context, since said facts are completely known to a person skilled in the art.

The inner temperature of the corrugator 12 is high enough, typically in the order of 165 to 175°C, in order for the plastic film 9 to soften and, consequently, stretch, letting the insulation layer 3 be restored towards its wider outer diameter. Since the outer diameter of the insulation layer 3 was decreased before the corrugator 12, the entire original free outer diameter thereof may be throughout larger before the plastic film 9 is wound on top thereof than the smallest inner diameter of the corrugated outer layer 2. Accordingly, in the corrugator 12, the insulation layer 3 is restored towards its wider diameter, being pressed against the inner surface of the outer layer 2.

The corrugated outer layer 2 is composed of successive crests 2a and grooves 2b, which are typically annular. If desired, the crest 2a and the groove 2b may also be made continuous in the form of a helical line. The smallest inner diameter of the corrugated outer layer 2 is at the grooves 2b. Accordingly, the insulation layer 3 is tightly pressed against the inner surface of the corrugated outer layer 2 at the grooves 2b. At the crests 2a, the insulation layer 3 is allowed to expand wider than the smallest inner diameter of the outer layer 2 in the manner shown in Figure 2.

In the corrugator 12, the plastic film 9 is heated to such a degree that it melts at least partly and thus glues/solders the insulation layer 3 to the inner surface of the outer layer 2. Consequently, the plastic film 9 constitutes an adhesion layer, which fastens the insulation layer 3 to the outer layer 2.

The thickness of the plastic film 9 may be between 20 µm and 100 µm, for example. By the action of heat, the thin plastic film may be invisible after the corrugator, but may still solder the insulation layer 3 sufficiently tightly against the inner surface of the outer layer 2.

The plastic film 9 is preferably coiled in such a manner that a new layer settles partly on top of the previous layer, i.e. the edges settle to overlap. This ensures that a tight layer is achieved with the plastic film. The plastic film 9 may also be coiled in such a manner that a gap remains between the different layers, whereby the plastic film does not provide a layer on top of the entire insulation layer 3, but such a solution, too, succeeds in decreasing the outer diameter of the insulation layer 3 before the corrugator and, consequently, in making the insulation layer 3 press tightly against the inner surface of the outer layer 2. The thickness of the layer provided by the plastic film 9 may also be affected by adjusting the number of revolutions of the winding device 8, thus allowing the adjustment of the magnitude of overlapping of the successive layers. The contractile force of the plastic film 9, i.e. the degree to which the insulation layer 3 is compacted, may be adjusted by adjusting the braking force of the winding device 8. The free outer diameter of the insulation layer 3 may be made for instance 3 to 20 mm thicker than the smallest inner diameter of the outer layer 2, which is at the groove 2b, as mentioned. The smallest inner diameter of the outer layer 2 may vary between 50 and 300 mm, for example.

The material of the plastic film 9 may be for instance low-density polyethylene PELD and the thickness thereof 2 to 200 µm, for example. The width of the plastic film 9, in turn, may thus be 50 to 200 mm, for example.

The insulation layer 3 is most preferably of crosslinked closed-cell polyethylene foam. The insulation layer 3 may be made from a plurality of prefabricated insulation plate layers. The thickness of the different layers may be the same. Naturally, the width of the layer wound outermost has to be larger than that of the insulation layer wound innermost. The total thickness of the insulation layer 3 may be 8 to 20 mm, for example. This being so, the insulation layer 3 is typically sufficiently thick to serve as a condensation insulation. If the thickness of the insulation layer 3 is not sufficient to serve as thermal insulation, additional insulation may be arranged on the outside of the ventilation duct 1.

The corrugated outer layer 2 is most preferably made from polyethylene PE. It is naturally feasible to use also other materials. For example, the insulation layer 3 may also be of foamed polypropylene. Correspondingly, the outer layer 2 may also be of polypropylene. The thickness of the outer layer 2 may be 0.3 to 2 mm, for example. The height of the crest 2a may be 5 to 30 mm, for example.

The fact that the outer layer 2 is made corrugated renders the ring stiffness of the piping element quite good, 8 to 12 kN/m², for example. The ventilation duct 1 is particularly well suitable for use embedded in the ground underneath a building, for example. However, because of the corrugation and the softness of the insulation layer 3, the ventilation duct is bendable. The fact that the ventilation duct 1 is bendable means that the ventilation duct may be wound onto a coil for storage and transportation, and uncoiled from the coil in connection with installation. The outer diameter of the ventilation duct may typically be between 60 and 320 mm. For storage and transportation, such ventilation ducts 1 may be wound onto a coil having a diameter varying between 0.8 and 3 m, for example. The inner diameter of the ventilation duct 1 preferably has standard measures. This being so, connection pieces, such as corner pieces or connecting pieces and the like components of a ventilation system may be the same components as when non-insulated ventilation ducts are used.

The inner surface 14 of the insulation layer 3 is preferably made antistatic. For example, the inner surface may be a polyethylene layer containing carbon black and having a thickness of 0.1 to 0.5 mm. On the other hand, the inner surface may be an aluminium film. The plate from which the insulation layer 3 is made may be ready coated with this antistatic material, rendering the manufacture of a ventilation duct with an antistatic inner surface simple.

It is reasonably simple to make the inner surface 14 such that is endures wear quite well. This allows the ventilation duct 1 to be cleaned during use and in spite thereof, the insulation layer 3 is not substantially damaged even in mechanical cleaning. On the other hand, thanks to the antistatic layer, cleaning has to be performed quite infrequently, since due to the antistatic finish, not very much dust or other dirt adheres to the inner layer of the ventilation duct.

The inner surface 14 of the insulation layer 3 is smooth. The smoothness of the inner surface 14 also helps in preventing dust and dirt from adhering to the inside of the duct, thus facilitating the cleaning of the duct.

Typically, the insulation layer 3 is quite flexible *per se.* However, the flexibility of the insulation layer may be increased by providing it with holes or incisions.

In some cases, the features presented in the present application may be used as such, irrespective of other features. On the other hand, if need be, the features disclosed in the present application may be combined to provide different combinations.

The drawings and the related description are only intended to illustrate the idea of the invention. The details of the invention may vary within the scope of the claims.

Instead of a winding device and plastic film, the outer diameter of the insulation layer may be temporarily decreased also for instance by conveying the insulation layer through a reducer cone that reduces its outer diameter. In this case, the outer diameter of the insulation layer decreases in the reducer cone and is restored due to material memory towards its original free outer diameter against the inner surface of the outer layer 2. Furthermore, the outer diameter of the insulation layer may be decreased by extruding a layer of polyethylene, for example, onto the outer surface of the insulation layer for shrinking it, the polyethylene layer allowing the insulation layer 3 to expand by the action of heat in a corrugator, i.e. it behaves in the same way as the plastic film 9.

## Claims

1. A ventilation duct comprising a body layer and an insulation layer (3), **characterized in that**
a corrugated outer layer (2) constitutes the body layer, that
the insulation layer (3) is pre-produced, that
the pre-produced insulation layer (3) is arranged on the inside of the outer layer (2), and that
the pre-produced insulation layer (3) constitutes the inner layer of the ventilation duct (1).

2. A ventilation duct as claimed in claim 1, **characterized in that**
the free outer diameter of the pre-produced insulation layer (3) is larger throughout than the smallest inner diameter of the corrugated outer layer (2).

3. A ventilation duct as claimed in claim 1 or 2, **characterized in that**
an adhesion layer is disposed between the outer surface of the pre-produced insulation layer (3) and the inner surface of the corrugated outer layer (2) for fastening the pre-produced insulation layer (3) and the outer layer (2) to one another.

4. A ventilation duct as claimed in claim 3, **characterized in that**
the adhesion layer is made from a plastic film (9).

5. A ventilation duct as claimed in any one of the preceding claims,
**characterized in that**
the inner surface of the insulation layer is provided with an antistatic inner surface (14).

6. A ventilation duct as claimed in any one of the preceding claims,
**characterized in that**
the pre-produced insulation layer (3) is made of an insulation material plate wound into the shape of a duct.

7. A method for forming a ventilation duct, **characterized by**
forming an insulation layer and arranging it into the shape of a duct,
guiding the pre-produced insulation layer (3) formed into the shape of a duct into a corrugator (12) and
producing with the corrugator (12) a corrugated outer layer (2) to the outside of the pre-produced insulation layer, the pre-produced insulation layer (3) thus forming an inner layer of the ventilation duct (1).

8. A method as claimed in claim 7, **characterized by**
reducing temporarily the outer diameter of the pre-produced insulation layer (3) before the insulation layer (3) is guided into the corrugator (12).

9. A method as claimed in claim 8, **characterized by**
making the free outer diameter of the pre-produced insulation layer (3) larger throughout than the smallest inner diameter of the corrugated outer layer (2).

10. A method as claimed in claim 8 or 9, **characterized by**
reducing the outer diameter of the pre-produced insulation layer (3) by wrapping plastic film (9) around the insulation layer and by softening the plastic film (9) inside the corrugator (12) so that the plastic film (9) stretches and allows the insulation layer (3) to restore itself towards its wider outer diameter.

11. A method as claimed in claim 10, **characterized by**
softening the plastic film (9) in the corrugator (12) to the extent that it causes an adhesion between the pre-produced insulation layer (3) and the outer layer (2).

12. A method as claimed in any one of claims 6 to 11, **characterized by**
forming the insulation layer (3) from an insulation material plate by winding the insulation material plate into an insulation layer in the shape of a duct before guiding it into the corrugator (12).
